# EUROPEAN PATENT SPECIFICATION

(11) **EP 4 459 641 B1**
(45) Date of publication and mention of the grant of the patent: **01.04.2026**
(21) Application number: 23883013.7
(22) Date of filing: 20.10.2023
(51) Int. Cl.: H01B 7/295, H01B 3/46, H01B 7/42, H01M 10/658, H01M 50/24, H01M 50/522

(54) **FIRE-RESISTANT CABLE AND BATTERY PACK INCLUDING SAME**
FEUERFESTES KABEL UND BATTERIEPACK DAMIT
CÂBLE RÉSISTANT AU FEU ET BLOC-BATTERIE LE COMPRENANT

(30) Priority: 24.10.2022 KR 20220137521
(43) Date of publication of application: 06.11.2024
(73) Proprietor: LG Energy Solution, Ltd., Seoul 07335 (KR)
(72) Inventor: YUN, Sun Woo, Daejeon 34122 (KR)
(74) Representative: Plasseraud IP
(86) International application number: PCT/KR2023/016354
(87) International publication number: WO 2024/090907

(56) References cited:
- JP-A- 2013 038 338
- JP-A- 2015 072 766
- KR-A- 20180 096 525
- KR-A- 20210 129 399
- KR-B1- 100 378 524
- KR-B1- 102 254 205
- US-A1- 2011 247 877
- US-B1- 10 236 098

## Description

### [Technical Field]

The present invention relates to a fire-resistant cable and a battery pack including the same.

More specifically, the present invention relates to a fire-resistant cable including a fire-resistant silicone sheath layer that is ceramicized at high temperatures and a metal case surrounding the sheath layer to maintain insulation and airtight properties even at high temperatures at which ignition occurs inside a battery pack, and the battery pack.

The present application claims the benefit of priority based on Korean Patent Application No. 10-2022-0137521, filed on October 24, 2022.

### [Background Art]

A battery pack for use in electric vehicles, etc. has a structure in which a plurality of battery modules including a plurality of secondary batteries are connected in series or in parallel to obtain high power. The secondary batteries each include positive and negative current collectors, a separator, an active material, an electrolyte, etc. and thus can be repeatedly charged and discharged through an electrochemical reaction between these components.

A bus bar, a cable, and the like are used to electrically connect the battery modules. The cable is used to electrically connect terminal parts of adjacent battery modules, electrically connect a battery management system (BMS) unit and a battery module or the BMS unit and battery cells included in the battery modules, or connect battery modules to an external electrical device.

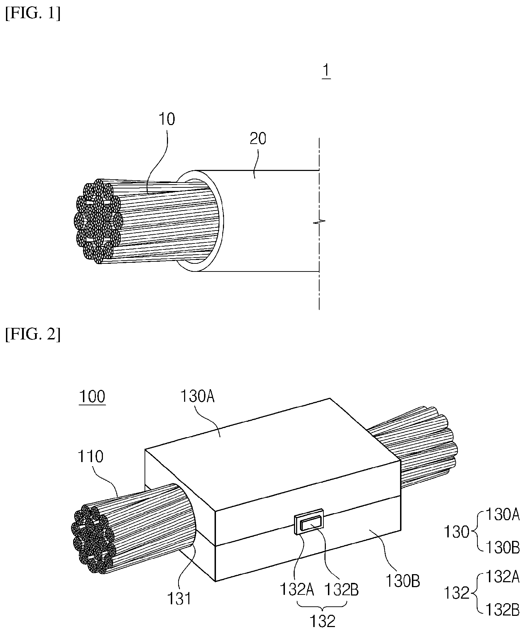

FIG. 1 is a schematic diagram illustrating a structure of a cable 1 of the related art.

As shown in FIG. 1, the cable 1 of the related art includes a cable core wire 10 and a sheath layer 20 surrounding the cable core wire 10. The cable core wire 10 is a general copper core wire. The sheath layer 20 is formed of a plastic resin such as polyethylene (PE) or polyvinyl chloride (PVC).

When in a battery pack, for example, battery modules are electrically connected using the cable 1 of the related art, there is no problem with the operation of the battery pack at normal temperatures at which the battery pack operates normally.

However, when flames occur in the battery pack, the temperature of the flames is very high (500 to 800 °C or 800 °C or higher, or 1000 °C or higher in severe cases), and thus, the sheath layer 20 formed of the plastic resin melts completely and the cable core wire 10 is exposed to the outside. In this case, the exposed cable core wire 10 comes into electrical contact with other metal parts in the battery pack, thus causing an electrical short circuit to occur, and the flames spread further due to heat generated due to the electrical short circuit.

To prevent thermal propagation, a cable including a sheath layer formed of mica sheet, glass fiber, heat-resistant silicone (rubber) or the like may be taken into account.

However, in such a situation in which extremely high heat is generated, thermal propagation cannot be sufficiently prevented using the above-described materials. For example, a heat-resistant temperature of a typical heat-resistant silicone sheet is only in a range of 125 to 300 °C and thus a situation in which ignition occurs in a battery pack cannot be effectively coped with. In addition, a sheath layer formed of a mica sheet or glass fiber does not exhibit sufficient fire-resistance performance.

As described above, there have been recent demands to essentially design battery packs such that flames are prevented from leaking to the outside of the battery packs when ignition occurs in the battery packs.

In addition, there is a need to design a battery pack such that a cable core wire can be thermally and electrically insulated from surroundings even at high temperatures when flames are generated in the battery pack.

Meanwhile, for example, there is a case in which when battery modules are connected using a cable, the cable is supported by a structure (e.g., a partition) of a battery pack or is installed while passing through the structure. In this case, a sheath layer of the cable may be damaged by sharp edges of the partition, thus degrading insulating properties of the cable core wire or airtight properties.

Otherwise, there is a case in which the cable should be bent excessively according to an electrical connection path. However, in the case of thick cables for use in large-capacity batteries, it is difficult to bend the cables as desired, thus leading to assembly failure in a battery pack.

As described above, it is necessary to develop a technique for improving an insulation level and assemblability while securing fire resistance at high temperatures to maintain electrical insulation.

### [Related Art Literature]

### [Patent Document]

Japanese Patent Publication Registration No. 5312710
US 2011/247877 discloses a cable providing circuit integrity in case of fire. US 10 236 098 discloses a fireproof cable.

### [Disclosure]

### [Technical Problem]

The present invention is directed to providing a fire-resistant cable for maintaining thermal and electrical insulation as long as possible even when flames occur in a battery pack.

The present invention is also directed to providing a battery pack including the fire-resistant cable.

### [Technical Solution]

According to an aspect of the present invention, a fire-resistant cable includes a cable core wire, a fire-resistant silicone sheath layer surrounding portions of the cable core wire excluding both ends thereof and ceramicized at high temperatures to support the cable core wire, and a metal case accommodating the cable core wire and the fire-resistant silicone sheath layer, wherein both sides of the metal case are provided with openings through which the both ends of the cable core wire are drawn out to the outside.

The fire-resistant silicone may be ceramicized at a temperature of 500 to 1700 °C.

The fire-resistant silicone may be ceramicized by sintering of a silicone resin containing a silicone compound represented by Chemical Formula 1 below and a metal oxide containing silicon oxide.

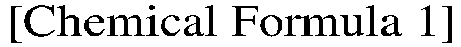

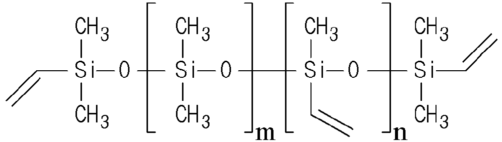

In Chemical Formula 1 above, m and n are each an integer of 10 to 30.

The silicone resin and the metal oxide may be contained in a weight ratio of 1:0.5 to 1.5.

The metal oxide containing silicon oxide may contain at least one of pure silicon dioxide, silica, quartz, silica stone, tridymite, and keatite.

The metal case may include an upper case and a lower case, and the upper case and the lower case may be combined with each other by hook-coupling.

At least one of an inner side and an outer side of the metal case may be anodized.

The metal case may be formed of aluminum, steel or stainless steel.

The cable core wire may include a bent portion.

The metal case may include a bent portion corresponding to a shape of the bent portion.

The fire-resistant cable may be a high-voltage cable configured to electrically connect high-voltage terminal parts of a plurality of battery modules.

According to another aspect of the present invention, a battery pack includes a plurality of battery modules, anti-flame partitions installed between the plurality of battery modules, the above-described fire-resistant cable for electrically connecting the plurality of battery modules, and a pack housing accommodating the plurality of battery modules and the anti-flame partitions.

The anti-flame partitions may be each provided with a cable installation through-hole or a cable installation groove, the metal case of the fire-resistant cable may be seated in the cable installation through-hole or the cable installation groove, and both ends of the cable core wire drawn out from the openings of the metal case may be electrically coupled to terminal parts of the plurality of battery modules at both sides of the anti-flame partitions.

The metal case of the fire-resistant cable may be formed to correspond to a shape of the cable installation through-hole or the cable installation groove.

### [Advantageous Effects]

A fire-resistant cable of the present invention includes a fire-resistant silicone sheath layer that is ceramicized to support a cable core wire when fires occur in a pack instead of a sheath layer that is burned in flames and thus is capable of maintaining insulation and airtight properties even at high temperatures.

The fire-resistant cable of the present invention further includes a metal case surrounding the fire-resistant silicone sheath layer. The metal case maintains the shape of the cable core wire and surrounds the fire-resistant silicone to prevent the fire-resistant silicone from being directly exposed to flames, thereby preventing deformation of the fire-resistant silicone and further enhancing insulation and airtight properties.

In addition, the metal case protects the fire-resistant silicone and the cable core wire to prevent damage to insulation due to sharp edge parts and improve airtightness with partitions of a battery pack.

In addition, according to the present invention, the cable core wire can be first molded and installed in the battery pack, and the metal case with the fire-resistant sheath layer can be combined with the cable core wire. Therefore, even a thick core wire can be molded to have a small radius of curvature (R value) and thus is suitable for a large-capacity battery.

### [Brief Description of the Drawings]

FIG. 1 is a schematic diagram illustrating a structure of a cable 1 of the related art.
FIG. 2 is a perspective view of a fire-resistant cable according to an embodiment of the present invention.
FIG. 3 is a perspective view illustrating a state in which a metal case of the fire-resistant cable of FIG. 2 has yet to be assembled.
FIG. 4 is a side view and a plan view of the fire-resistant cable of the embodiment of FIG. 2.
FIG. 5 is a cross-sectional view of the fire-resistant cable of the embodiment of FIG. 2.
FIG. 6 is a cross-sectional view of a fire-resistant cable according to another embodiment of the present invention.
FIG. 7 is a plan view of a fire-resistant cable according to another embodiment of the present invention.
FIG. 8 is a schematic view of an example of a structure of a battery pack in which a fire-resistant cable of the present invention is installed.
FIG. 9 is a schematic view of another example of a structure of a battery pack in which a fire-resistant cable of the present invention is installed.
FIG. 10 is a side cross-sectional view illustrating a state in which a fire-resistant cable of the present invention is installed in a battery pack.

### [Best Mode]

Hereinafter, a configuration of the present invention will be described in detail with reference to the accompanying drawings and various embodiments. Embodiments described below are provided as examples to help the understanding of the present invention, the accompanying drawings are not drawn on actual scale to help the understanding of the present invention, and the sizes of some components may be exaggerated.

The present invention may be embodied in many different forms and implemented in various embodiments. Thus, certain embodiments are illustrated in the drawings and described in detail herein. It should be, however, understood that the present invention is not limited to particular embodiments and include all modifications, equivalents, and alternatives falling within the idea and scope of the present invention.

### [Fire-resistant Cable]

A fire-resistant cable of the present invention includes a cable core wire, a fire-resistant silicone sheath layer surrounding portions of the cable core wire excluding both ends thereof and ceramicized at high temperatures to support the cable core wire, and a metal case that accommodates the cable core wire and the fire-resistant silicone sheath layer and that is provided with an opening through which the both ends of the cable core wire are drawn out to the outside.

The cable core wire may be a general copper core wire. The cable core wire may be a core wire formed by twisting a plurality of copper wires. The both ends of the cable core wire are electrically connected to a coupling portion corresponding thereto.

The fire-resistant silicone sheath layer is a layer applied to the cable core wire surrounding portions of the cable core wire excluding both ends thereof. That is, as shown in FIGS. 2 to 5, the periphery of a central part of the cable core wire excluding both ends is coated with the fire-resistant silicone sheath layer. The fire-resistant silicone sheath layer is ceramicized at high temperatures to support the cable core wire. The fire-resistant silicone may be ceramicized at a temperature of 500 to 1700 °C. The fire-resistant silicone of the present invention with a fire-resistant temperature of 500 °C or higher is distinguished from heat-resistant silicone with a heat-resistant temperature of less than 300 °C. Heat-resistant silicone is a silicone resin or rubber composition that is a material with flexibility and bendability that are characteristics of silicone but is burned out or burned into ashes at a high temperature of 500 °C or higher without being ceramicized. Therefore, there is a limit to applying heat-resistant silicone to prevent a short circuit from occurring in a battery pack during heat propagation or prevent heat propagation.

The fire-resistant silicone sheath layer is ceramicized, i.e., it exhibits "fire-resistant" performance, at a high temperature of 500 °C or higher, thus allowing insulation and airtightness characteristics to be maintained in the battery pack even when flames occur.

As described above, a fire-resistant cable according to the present invention exhibits high fire-resistant performance, because the fire-resistant cable includes fire-resistant silicone and a structure thereof is improved.

The fire-resistant silicone is a composition containing a silicone resin and a metal oxide as main components and thus exhibits flexibility and bendability, which are characteristics of silicone, at room temperature. In addition, the fire-resistant silicone has a certain level of elasticity and thus exhibits high impact resistance and insulation, and forms a sintered body with a complex ceramic structure when exposed to a high temperature due to the sintering of the silicone resin and the metal oxide.

Specifically, the silicone resin contained in the fire-resistant silicone produces silica in powder form when burned at a high temperature. The produced silica reacts with the metal oxide contained in the fire-resistant silicone to form an "eutectic mixture" on an edge of the metal oxide, so that bridging may be performed between the silica and the metal oxide, thus causing the formation of a ceramic product that is cured at an ignition temperature and condensed when cooled. Such a ceramic body prevents a short-circuit or disconnection between conductors due to damage to the fire-resistant silicone sheath layer even when external mechanical impact is applied or moisture penetrates in the case of a fire, thereby performing an electrical function of the cable.

To this end, the fire-resistant silicone according to the present invention includes a silicone resin and a metal oxide.

The silicone resin is not particularly limited as long as it is a resin including silicon (Si) in a molecule, but preferably includes a silicone compound represented by the following Chemical Formula 1 (hereinafter referred to as a silicone compound of Chemical Formula 1):

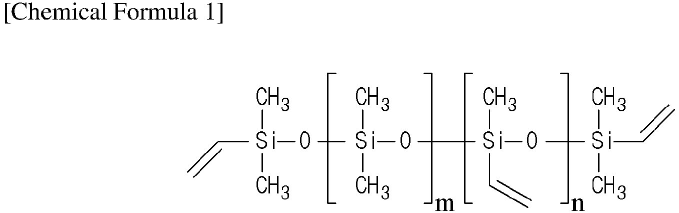

In Chemical Formula 1 above, m and n are each an integer of 10 to 30.

In Chemical Formula 1, the silicone compound includes a methylsiloxane repeating unit, and includes a vinyl group at the inside of and an end of the methylsiloxane repeating unit. The vinyl group is contained in the repeating unit as well as at the end of the silicone compound of Chemical Formula 1 to increase a degree of polymerization of the silicone resin when exposed to a high temperature, thereby implementing excellent fire-resistance characteristics compared to a silicone compound that does not contain the vinyl group.

In addition, the weight-average molecular weight of the silicone compound of Chemical Formula 1 may be adjusted to a specific range. The silicone compound of Chemical Formula 1 is a compound serving as a base of the silicone resin and thus affect the physical properties of the fire-resistant silicone at room temperature and high temperatures according to the weight-average molecular weight of the silicone compound of Chemical Formula 1. For example, when the weight-average molecular weight of the silicone compound of Chemical Formula 1 is excessively high, the viscosity of the silicone resin increases and thus reactivity may decrease during high-temperature sintering, and when the weight-average molecular weight is extremely low, the elasticity and flexibility of the silicone resin at room temperature decrease, thus reducing the manufacturing processability, impact resistance, etc. of a fire-resistant cable. Therefore, the weight-average molecular weight of the silicone compound of Chemical Formula 1 according to the present invention may be in a range of 1,000 to 9,000 g/mol, and specifically, a range of 3,000 to 8,000 g/mol or a range of 5,000 to 7,000 g/mol.

In addition, the metal oxide is a composition containing silicon oxide and may serve as a crystalline nucleus to form a high-density ceramic body together with the silicone resin described above when exposed to high temperatures.

The metal oxide may include at least one of silicon dioxide, silica, quartz, silica stone, tridymite, or keatite. The metal oxide may include pure silicon dioxide (SiO₂) and a mineral, e.g., quartz, which contains silicon dioxide (SiO₂) as a main component, is economically feasible, has a high melting point (highly fire-resistant) and a high sintering degree, and exhibit excellent electrical insulation performance. In particular, silicon dioxide, silica, quartz, etc. may contribute to improving various performances in a sintering process, cause fire-resistant silicone to be easily dissolved and molded, and reduce defects that may occur in ceramic bodies.

In addition, it is preferable that the metal oxide has a crystal structure that increases fire resistance, insulation, mechanical strength, etc. when sintered together with a silicone resin. The metal oxide may be in the form of powder, and may have a size of 200 µm or less, for example, a size of 0.1 µm to 200 µm or a size of 0.1 µm to 100 µm, but is not limited thereto.

The silicone resin may further contain a silicone compound represented by Chemical Formula 2 below (hereinafter referred to as "silicone compound of Chemical Formula 2"), and the silicone compound of Chemical Formula 2 participates in the sintering of the metal oxide at a high temperature together with the silicone compound of Chemical Formula 1 to form a silicone sintered body:

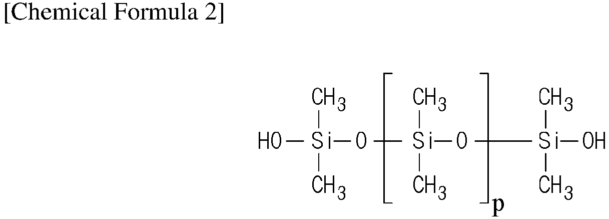

In Chemical Formula 2 above, p is an integer of 10 to 30.

The silicone compound of Chemical Formula 2 may increase the flexibility of the fire-resistant silicone at room temperature and induce the termination of sintering of the silicone resin through dehydration condensation with the silicone compound of Chemical Formula 1 during sintering, thereby terminating the formation reaction of the ceramic body.

To this end, the silicone compound of Chemical Formula 2 may be used in an amount of less than 10 parts by weight, for example, 0.5 to 9 parts by weight, 1 to 6 parts by weight, or 2 to 5 parts by weight, based on the 100 parts by weight of the fire-resistant silicone.

In addition, the fire-resistant silicone may contain a silicone resin and a metal oxide in a certain ratio to realize high elasticity at room temperature and form a ceramic body quickly when exposed to high temperatures.

Specifically, in the fire-resistant silicone, a weight ratio between the silicone resin and the metal oxide may be 1:0.5 to 1.5, and specifically, 1:0.8 to 1.2. When the weight ratio of the metal oxide is less than 0.5, it is difficult to obtain a ceramic structure having a high-density crystal structure at high temperatures and thus sufficient fire resistance and mechanical strength may not be achieved. When the weight ratio of the metal oxide exceeds 1.5, the flexibility of the fire-resistant silicone decreases at room temperature and thus the fire-resistant silicone is difficult to be processed.

For example, the fire-resistant silicone of the present invention may contain 35 to 50 wt% of the silicone compound of Chemical Formula 1, 16 to 32 wt% quartz, 10 to 27 wt% silicone dioxide, and 1 to 6 wt% of the silicone compound of Chemical Formula 2, and may further contain a certain solvent to increase processability during the manufacture of the fire-resistant silicone in some cases.

As described above, the fire-resistant silicone of the present invention is cured and ceramicized by sintering the silicone resin and the metal oxide at 500 °C or higher. The fire-resistant silicone may be ceramicized at temperatures of up to 1700 °C, and theoretically, it can be kept partially ceramicized even at temperatures above 1700 °C. However, at a temperature above 1700 °C, a time period during which the fire resistance silicone is kept ceramicized may decrease, thus causing a failure of the maintenance of fire-resistance performance required inside a battery pack.

As described above, the fire-resistant silicone has the same properties as rubber having bendability, flexibility, and elasticity before being ceramicized. Therefore, it is easy to inject the fire-resistant silicone sheath layer into the metal case, which will be described below, to be injection-molded or applied inside the metal case. In addition, when the cable core wire is inserted into the fire-resistant silicone sheath layer in the metal case, the fire-resistant silicone that is flexible surrounds the cable core wire while pressing the cable core wire. Accordingly, the fire-resistant silicone that is flexible may cover the cable core wire without gaps while following the shape of the cable core wire.

Because the fire-resistant silicone sheath layer is flexible before being ceramicized and thus may flexibly follow the shape of the cable core wire regardless of deformation of the cable core wire. Therefore, when the fire-resistant cable of the present invention is installed in a battery pack, it is possible to respond to even a slight assembly tolerance. For example, when a battery module is fastened to the battery pack by bolting, the fire-resistant silicone sheath layer can absorb the movement or slight distortion of a cable core wire connected to the battery module. In addition, even when the battery pack vibrates due to the vibration of an electric vehicle, the fire-resistant silicone sheath layer may naturally absorb the vibration.

Meanwhile, the ceramicized fire-resistant silicone may continuously maintain the shape of the cable core wire while directly surrounding the cable core wire.

The fire-resistant cable of the present invention further includes a metal case in which the cable core wire and the fire-resistant silicone sheath layer are accommodated.

Both sides of the metal case may be provided with openings through which both ends of the cable core wire are drawn out to the outside. The both ends of the cable core wire may be exposed to the outside through the openings in the both sides of the metal case. In addition, the both ends of the cable core wire may be coupled to electrical connection parts corresponding thereto.

The metal case maintains the shape of the molded cable core wire. In addition, the metal case covers the fire-resistant silicone sheath layer to prevent the fire-resistant silicone sheath layer from being directly exposed to flames when ignition occurs in the battery pack. Accordingly, the fire-resistant silicone sheath layer can be prevented from being deformed, thereby enhancing insulation and airtight properties. In addition, the metal case firmly holds the outer shape of the fire-resistant silicone to prevent the fire-resistant silicone from collapsing when ignition occurs in the battery pack, thereby maintaining insulation and airtightness properties for a long time.

In addition, when the metal case is installed in, for example, a battery pack, the metal case may be in surface-contact into an assembly space in the battery pack, thus maintaining airtightness. Because the metal case includes hard surfaces, the insulation material or the cable core wire inside the fire-resistant cable may be prevented from being damaged even when there is a sharp edge portion in the assembly space in the battery pack.

The metal case may be formed of aluminum, steel or stainless steel. However, the present invention is not limited thereto, and the metal case may be manufactured using a different metal, provided that the metal has strength sufficient to protect the cable core wire and the fire-resistant silicone sheath layer and is easy to mold and process.

Surface treatment may be performed on a surface of the metal case to reinforce insulating properties. For example, anodizing may be performed on an inner side or outer side of the metal case or both the inner and outer sides of the metal case.

Anodizing is one of metal surface treatment techniques, e.g., phosphate film treatment, chromate, etc., pertaining to chemical conversion coating treatment, and is applied to enhance corrosion resistance and wear resistance of a non-ferrous metal such as aluminum, titanium, copper or magnesium. When a target metal is applied to a positive electrode and electrolyzed in a diluted acid solution, an oxide film is formed by oxygen generated from the positive electrode. In the case of aluminum, alumina (Al₂O₃) is formed as an oxide film. Because the oxide film is an insulating material, the metal case formed of the anodized metal (for example, aluminum) serves as a surface insulating material. Therefore, the fire-resistant cable of the present invention with the anodized metal case includes two electrical insulation materials. That is, the fire-resistant silicone sheath layer is provided as a first insulating material, and the oxide film on the surface of the metal case is provided as a second insulating material. Therefore, the insulation properties of the fire-resistant cable is further improved by anodizing.

The metal case may be formed integrally or formed by combining separate case components together, provided that the cable core wire and the fire-resistant silicone sheath layer surrounding the cable core wire can be accommodated therein. However, both sides of the metal case should be provided with openings through which both ends of the cable core wire are drawn out to the outside regardless of the form of the metal case.

The fire-resistant cable and the form of the metal case will be described in detail with respect to the following embodiments.

### [Embodiments of the Present Invention]

### (First Embodiment)

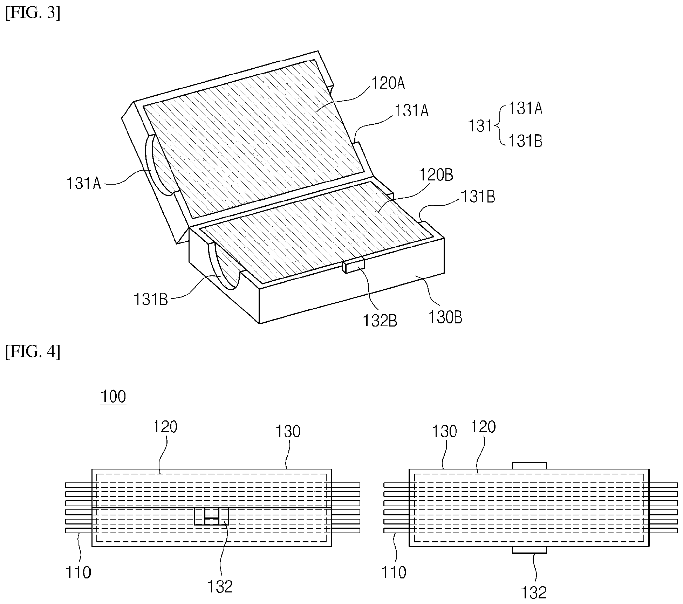

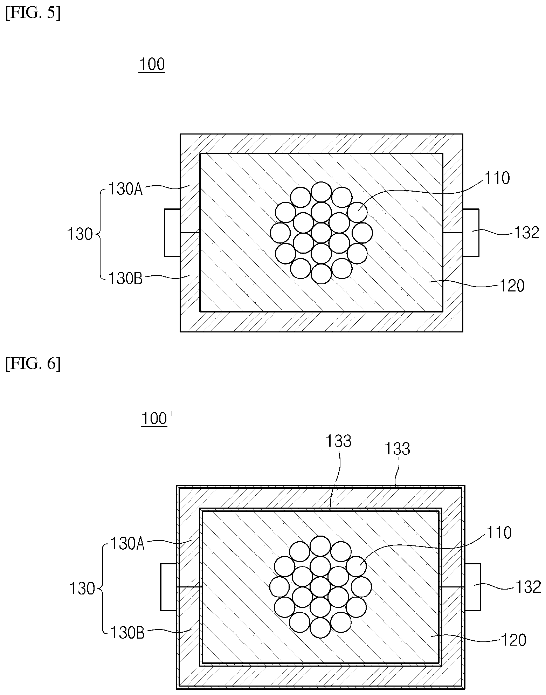

FIG. 2 is a perspective view of a fire-resistant cable according to an embodiment of the present invention. FIG. 3 is a perspective view illustrating a state in which a metal case of the fire-resistant cable of FIG. 2 has yet to be assembled. FIG. 4 is a side view and a plan view of the fire-resistant cable of the embodiment of FIG. 2. FIG. 5 is a cross-sectional view of the fire-resistant cable of the embodiment of FIG. 2.

Referring to the drawings, a metal case 130 according to a fire-resistant cable 100 of the present embodiment includes an upper case 130A and a lower case 130B. That is, in the present embodiment, the metal case 130 is not integrally formed and includes two components. The upper case 130A and the lower case 130B may include a hook coupling part 132 to be easily combined with each other. That is, the lower case 130B includes a protruding portion 132B on an upper part of a front surface thereof, and the upper case 130A includes a hook portion 132A into which the protruding portion 132B is inserted. The hook portion 132A and the protruding portion 132B constitute the hook coupling part 132. As shown in FIG. 3, sides of the upper case 130A and the lower case 130B at which the hook coupling part 132 is not formed are coupled to each other by hinge-coupling. Therefore, one of the upper and lower cases 130A and 130B may be hinge-rotated to be rotated (moved) relative to the other. In the state of FIG. 3, one of the upper and lower cases 130A and 130B is rotated with respect to the other to be close to the other and the protruding portion 132B is inserted into the hook portion 132A to combine the upper and lower cases 130A and 130B, thereby achieving the metal case 130 of the present invention.

As shown in FIG. 3, both sides of the upper case 130A are provided with open grooves 131A, and both sides of the lower case 130B are provided with open grooves 131B. Therefore, when the upper and lower cases 130A and 130B are combined with each other, the opening grooves 131A of the upper case 130A and the opening grooves 131B of the lower case 130B are engaged with each other to form openings 131. Both ends of the cable core wire 110 may be drawn out to the outside through the openings 131. The sizes or shapes of the open grooves 131A and 131B in the upper and lower cases 130A and 130B need not be necessarily the same. For example, one of the two open grooves 131A and 131B may be smaller than the other as long as the two open grooves 131A and 131B are engaged with each other to form an opening corresponding to the shape of the cable core wire.

In the present embodiment, two open grooves 131A and 131B are engaged with each other to form the opening 131 but the present invention is not limited thereto. For example, both sides of one of the upper case 130A and the lower case 130B may be provided with openings, and the other is closed without openings. However, as in the present embodiment, when two cases, i.e., upper and lower cases, are provided with open grooves and the two open grooves are combined with each other to form an opening, it is easy to assemble a fire-resistant cable by positioning the cable core wire 110 between the upper and lower cases and combining the upper and lower cases with each other.

In addition, the cable core wire 110 may be fixedly coupled to the metal case 130 more easily by hook coupling.

Referring to FIG. 3, the inside of the upper case 130A is filled with an upper fire-resistant silicone sheath layer 120A, and the inside of the lower case 130B is filled with a lower fire-resistant silicone sheath layer 120B. A process of assembling the cable core wire 110 and the metal case 130 will be described with reference to FIGS. 2 and 3 below. The cable core wire 110 is positioned on one of the upper and lower fire-resistant silicone sheath layers 120A and 120B, e.g., the lower fire-resistant silicone sheath layer 120B. In this case, lower portions of both ends of the cable core wire 110 are positioned in the open grooves 131B in the both sides of the lower case 130B, and the both ends are drawn out by a certain length to the outside of the open grooves 131B. Next, the upper case 130A is hook-coupled to the lower case 130B such that the open grooves 131A of the upper case 130A cover upper parts of the both ends of the cable core wire 110. As shown in FIGS. 2 and 5, when the upper and lower cases 130A and 130B are hook-coupled to each other, the cable core wire 110 is fixed inside the metal case 130 by being pressed by the upper and lower fire-resistant silicone sheath layers 120A and 120B due to a hook coupling force. Because the fire-resistant silicone sheath layer 120 has elasticity and flexibility, the cable core wire 110 is buried by being pressed by the upper and lower fire-resistant silicone sheath layers 120A and 120B due to the hook bonding force. Accordingly, the cable core wire 110 is coated with the fire-resistant silicone sheath layer 120 in the form of FIG. 5 and thus is fixed in the metal case 130. In this case, the both ends of the cable core wire 110 are drawn out to the outside by a certain length. An outer circumference of the cable core wire 110 is regulated by an inner circumferential surface of the open groove 131A of the upper case 130A and an inner circumferential surface of the open groove 131B of the lower case 130B to stably maintain the cable core wire 110 in the metal case 130.

As described above, the cable core wire 110 can be fixed in (coated with) the fire-resistant silicone sheath layer 120 while assembling the metal case 130 by configuring the metal case 130 with the upper and lower cases 130A and 130B and combining the upper and lower cases 130A and 130B with each other by hook-coupling.

If necessary, the upper fire-resistant silicone sheath layer 120A and the lower fire-resistant silicone sheath layer 120B shown in FIG. 3 may be molded into a shape (not shown) corresponding to the shape of the outer circumference of the cable core wire 110. For example, when the elasticity and flexibility of the fire-resistant silicone sheath layer 120 are insufficient, the cable core wire 110 may not be completely covered with the fire-resistant silicone sheath layer 120 despite the hook-coupling force of the upper and lower cases 130A and 130B. In this case, a space may be partially formed between the cable core wire 110 and the fire-resistant silicone sheath layer 120. To prevent the formation of the space, the shapes of the upper and lower fire-resistant silicone sheath layers 120A and 120B may be molded to form, for example, a shape corresponding to an outer circumference of an upper part of the cable core wire 110 and a shape corresponding to an outer circumference of a lower part of the cable core wire 110 on the upper and lower fire-resistant silicone sheath layers 120A and 120B. However, the fire-resistant silicone with the composition of the above-described embodiment has sufficient elasticity and flexibility and thus can be flexibly deformed by the hook coupling force to surround the cable composition without gaps, even when a shape of the cable core wire is not molded as shown in FIG. 3.

The cable core wire 110 and the metal case 130 may be assembled in advance as shown in FIG. 3. Alternatively, the cable core wire 110 may be coupled to the inside of the metal case 130 at a site where the battery pack is installed after the inside of the metal case 130 is filled or coated with the fire-resistant silicone sheath layer 120 in advance.

In addition, in order to form the fire-resistant silicone sheath layer in the metal case 130, fire-resistant silicone with flexibility may be applied inside the metal case 130 or openings may be formed in portions of the metal case 130 and the inside of the metal case 130 may be filled with the fire-resistant silicone from the outside through the openings. In the latter case, for example, the cable core wire 110 may be naturally coated with the fire-resistant silicone by placing the cable core wire 110 in advance in the metal case 130 and injecting (injection-molding) the fire-resistant silicone into the metal case 130 through the openings.

Advantages achieved when the cable core wire 110 is coupled to the metal case 130 provided with the fire-resistant silicone sheath layer 120 at a site will be described in detail with respect to another embodiment to be described below.

### (Second Embodiment)

FIG. 6 is a cross-sectional view of a fire-resistant cable according to another embodiment of the present invention.

In a fire-resistant cable 100' of the present embodiment, an inner side and outer side of a metal case 130 are anodized to reinforce insulation. Excluding anodizing, the second embodiment is the same as the first embodiment in that a cable core wire 110 and a fire-resistant silicone sheath layer 120 surrounding the cable core wire 110 are provided, the metal case 130 accommodates the cable core wire 110 and the fire-resistant silicone sheath layer 120, both sides of the metal case 130 are provided with openings through which both ends of the cable core wire 110 are drawn out.

As described above, anodizing is performed to improve corrosion resistance and wear resistance of a non-ferrous metal. For example, when the metal case 130 is formed of aluminum, when the aluminum is placed on a positive electrode and electrolyzed in a diluted acid solution, an oxide film 133 that is an insulating material, i.e., a metal oxide (alumina (Al₂O₃)), is formed on a surface of the aluminum due to oxygen generated from the positive electrode. Accordingly, insulating properties of the fire-resistant cable 100' of the present embodiment further improves.

The anodizing may be performed on an inner side or outer side of the metal case 130 or both the inner and outer sides as in an example of FIG. 6. When the inner side of the metal case 130 is anodized, the cable core wire 110 may be double-insulated together with the fire-resistant silicone sheath layer 10 inside the metal case 130. When the outer side of the metal case is anodized, electrical insulation performance may be improved with respect to an external metal part. When both the inner and outer sides of the metal case 130 are anodized, all of the above-described effects may be achieved.

### (Third Embodiment)

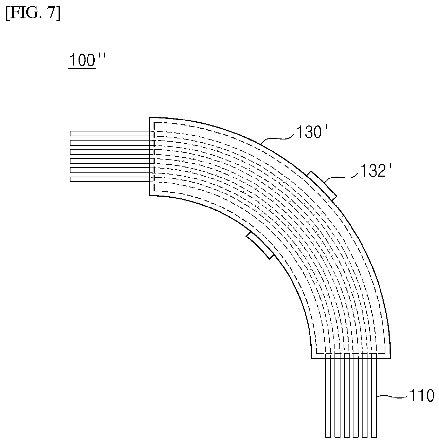

FIG. 7 is a plan view of a fire-resistant cable according to another embodiment of the present invention.

In the present embodiment, a fire-resistant cable 100" is illustrated, in which a cable core wire 110 includes a bent portion and a metal case 130' also includes a bent portion corresponding to a shape of the bent portion.

Excluding the shape of the fire-resistant cable 100", the third embodiment is the same as the previous embodiments in that the cable core wire 110 and a fire-resistant silicone sheath layer surrounding the cable core wire 110 are provided, the metal case 130' accommodates the cable core wire 110 and the fire-resistant silicone sheath layer, and both sides of the metal case 130' are provided with openings through which both ends of the cable core wire 110 are drawn out.

For example, there are cases in which a cable should be bent to a large extent due to the arrangement of components in a battery pack. However, in the case of a large-capacity battery pack, it is difficult to bend a conventional thick cable to a small radius of curvature (R-value), i.e., a certain threshold or more. Accordingly, a volume occupied by the cable in the battery pack increases and an area occupied by other components such as battery cells decreases, thus resulting in a reduction of energy density.

However, even in the case of a large-capacity battery pack, the fire-resistant cable 100" of the present embodiment may be first combined with a corresponding electrical coupling part by bending only the cable core wire 110 without a sheath layer. Because only the cable core wire that does not include the sheath layer is bent, the cable core wire may be bent by setting a radius of curvature, i.e., the R-value, to be small. Thereafter, the metal case 130' having a shape corresponding to the bent cable core wire and including the fire-resistant silicone sheath layer therein may be combined with the cable core wire. In this case, a hook coupling part 132' on the metal case 130' may also be formed in a curved shape.

As described above, the fire-resistant cable 100" of the present embodiment is advantageous in that assemblability is further improved because a fire-resistant cable can be easily installed even a core wire is relatively thick.

In the present embodiment, the cable core wire 110 may be first installed at a site due to the unique structure of the fire-resistant cable according to the present invention. Therefore, only a core wire can be first molded in a desired shape without a sheath layer and thus can be easily molded even when the core wire is relatively thick. Thereafter, the metal case 130' may be manufactured to correspond to the shape of the cable core wire 110, the inside of the metal case 130' may be coated or filled with the fire-resistant silicone sheath layer, and the cable core wire 110 may be assembled with the metal case 130' at a site, thereby easily installing the fire-resistant cable of the present invention.

The shape of the bent portions shown in FIG. 7 is only an example, and the fire-resistant cable of the present embodiment is also applicable to cases in which the bent portions are consecutive to each other or both a bent portion and a linear portion are provided as long as manufacturing conditions of the metal case 130' permit.

### (Battery Pack)

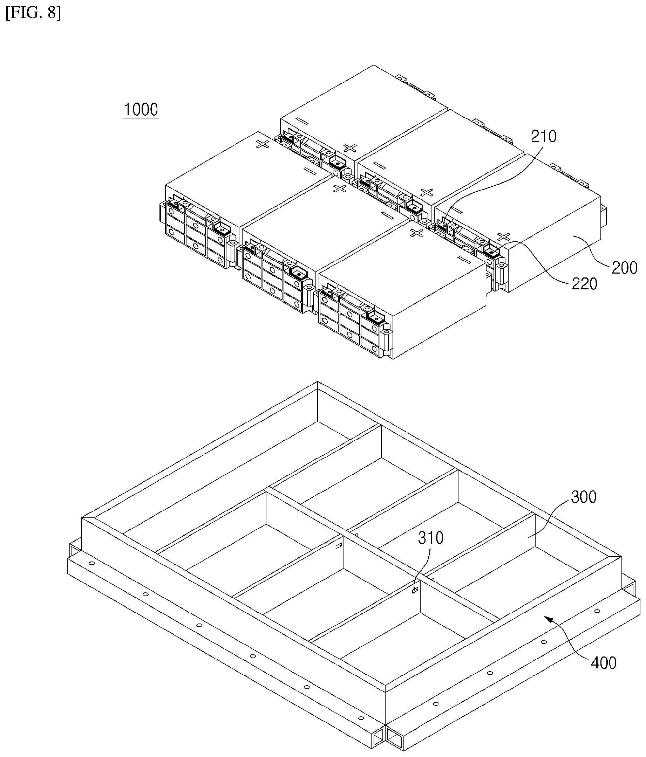

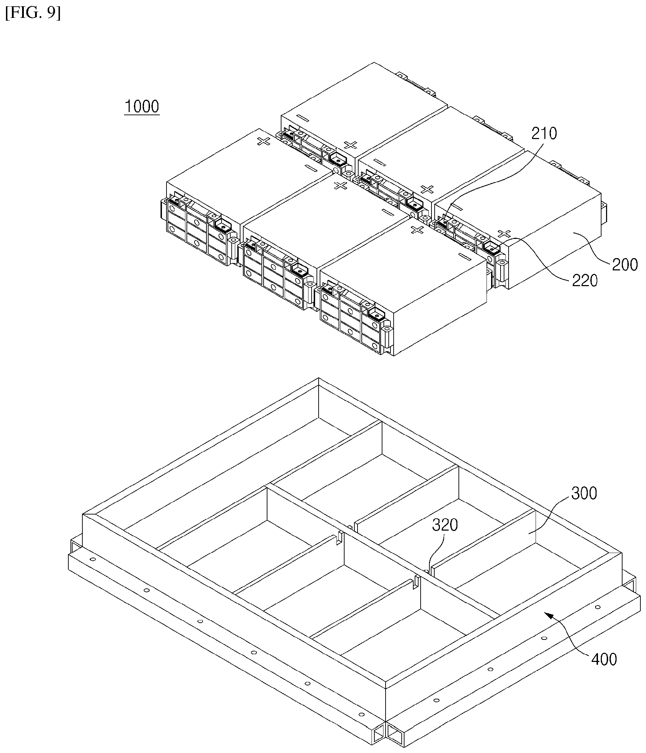

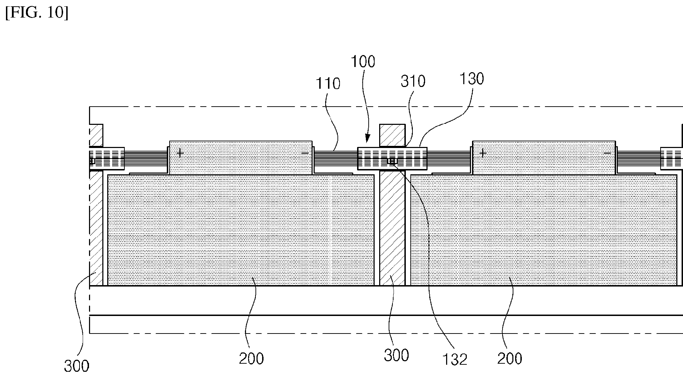

FIG. 8 is a schematic view of an example of a structure of a battery pack in which a fire-resistant cable of the present invention is installed. FIG. 9 is a schematic view of another example of a structure of a battery pack in which a fire-resistant cable of the present invention is installed. FIG. 10 is a side cross-sectional view illustrating a state in which a fire-resistant cable of the present invention is installed in a battery pack.

Each of the above-described fire-resistant cables 100, 100', and 100" of the present invention includes the fire-resistant silicone sheath layer 120 ceramicized at high temperatures and the metal case 130 surrounding the fire-resistant silicone sheath layer 120 to maintain the shape thereof. Therefore, when these fire-resistant cables are applied to a battery pack in which ignition may occur, the safety of the battery pack can be greatly improved.

The fire-resistant cable may be used to electrically connect, for example, a plurality of battery modules accommodated in a battery pack. In this case, the fire-resistant cable may electrically connect terminal parts of adjacent battery modules. Alternatively, the fire-resistant cable may be used to electrically connect a BMS unit and a battery module. Alternatively, the fire-resistant cable may be used to connect battery modules to an external electrical device.

Particularly, high-voltage terminal parts of the battery modules generate relatively high heat due to a high current. Accordingly, higher heat may be concentrated on the high-voltage terminal parts when flames occur in a pack. Therefore, the fire-resistant cable of the present invention is applicable as a high-voltage cable for electrically connecting high-voltage terminal parts of a plurality of battery modules.

A battery pack 1000 of the present invention may include a plurality of battery modules 200, anti-flame partitions 300 installed between the battery modules 200, the above-described fire-resistant cables 100, 100', and 100" for electrically connecting the battery modules 200, and a pack housing 400 accommodating the battery modules 200 and the anti-flame partitions 300.

FIG. 8 illustrates that the plurality of battery modules 200 are accommodated in the pack housing 400. The battery modules 200 each include a cell stack (not shown) in which a plurality of battery cells are stacked, and cell leads with different polarities are drawn out from the battery cells of the cell stack. The cell leads are electrically connected to a bus bar such as a terminal bus bar or an inter-bus bar, or a cable. The fire-resistant cable of the present invention may be used to electrically connect the plurality of battery modules.

Meanwhile, FIGS. 8 and 9 illustrate a general battery module 200 in which a module housing completely surrounds upper, lower, left, and right sides of a battery cell stack. However, the present invention is not limited thereto, and the fire-resistant cable of the present invention is also applicable to a battery module with a moduleless type module housing in which at least one of upper, lower, left and right sides of a cell stack is open or a battery cell block in which all of upper, lower, left and right sides of a cell stack are open. As described above, a battery pack with a so-called cell-to-pack structure may be configured by installing therein cell blocks or battery modules, in which all or part of a module housing is omitted. The fire-resistant cables 100, 100', and 100" of the present invention may be used for electrical connection of cell blocks or moduleless type battery modules installed in such a battery pack having the cell-to-pack structure.

In order to prevent flame propagation between adjacent modules, the battery pack 1000 may include the anti-flame partitions 300 installed between battery modules. The anti-flame partitions 300 may be formed of a metal to secure rigidity. The anti-flame partitions 300 functions to prevent flames from propagating to adjacent modules when a fire occurs in one module. In this case, the anti-flame partitions 300 may be each provided with a cable installation through-hole 310 or a cable installation groove 320. FIG. 8 illustrates that the anti-flame partition 300 is provided with the cable installation through-hole 310, and FIG. 9 illustrates that the anti-flame partition 300 is provided with the cable installation groove 320. In terms of flame prevention and airtightness, a partition is preferably provided with the cable installation through-hole 310 as shown in FIG. 8. An upper part of the cable installation groove 320 of FIG. 9 is open and thus facilitates installation of a cable and an electrical connection using the cable.

The fire-resistant cables 100, 100', and 100" may be mounted in the cable installation through-hole 310 or the cable installation groove 320. In this case, both ends of the cable core wire 110 drawn from the opening of the metal case 130 may be electrically coupled to terminal parts 210 and 220 of battery modules 200 located at both sides of the anti-flame partition 300.

FIG. 10 illustrates that the fire-resistant cable 100 electrically connects the battery modules 200 in the battery pack 1000. The anti-flame partition 300 may be located between adjacent battery modules 200 and provided with the cable installation through-hole 310. The metal case 130 of the fire-resistant cable 100 of the present invention is inserted into the cable installation through-hole 310. In this case, the shape of the metal case 130 of the fire-resistant cable 100 is formed to correspond to the shape of the cable installation through-hole 310 (or the cable installation groove 320). Therefore, the fire-resistant cable 100 of the present invention may be airtightly brought into surface contact with the anti-flame partitions 300. Accordingly, the airtightness of the battery pack may be further improved. In addition, even when the cable installation through-hole 310 or the cable installation groove 320 includes a sharp edge part due to processing, the metal case 130 surrounds and protects the fire-resistant silicone sheath layer 120 and the cable core wire 110. That is, the insulation level and airtightness of the fire-resistant cable are further improved by the metal case 130.

In this case, as in the second embodiment, the insulation of the fire-resistant cable 100' can be further improved by anodizing at least one side of the metal case 130. Although FIG. 10 illustrates that the fire-resistant cable 100 has a linear shape, battery modules may be connected by setting a cable core wire and a metal case to have a bent portion as in the third embodiment. In this case, a radius of curvature of the fire-resistant cable 100 may decrease, thus leading to an increase of the energy density of the battery pack.

Meanwhile, when a flame occurs in the battery pack 1000, in a fire-resistant cable of the present invention, a fire-resistant silicone sheath layer surrounding a cable core wire is ceramicized, thus forming a dense sintered body. That is, at a high temperature of 500 °C or higher, the fire-resistant silicone sheath layer is ceramicized and thus a shape thereof is maintained, unlike conventional heat-resistant silicone that is burned away or burned into ashes. Accordingly, the fire-resistant silicone sheath layer stably supports the cable core wire even when a flame occurs. The metal case not only maintains the shape of the fire-resistant silicone sheath layer but also prevents flames from being in contact with the fire-resistant silicone sheath layer, so that the fire-resistant silicone may be prevented from being deformed and insulation and airtightness characteristics may be further enhanced.

### [Experimental Examples]

### (Experimental Example 1)

Fire-resistant silicone containing 50 parts by weight of the silicone compound of Chemical Formula 1, 20 parts by weight of quartz, and 30 parts by weight of pure silicon dioxide was applied to a certain thickness to a cable core wire formed of copper with a certain cross-sectional area selected from a cross-sectional area that is in a range of 0.5 to 3 mm². A cable coated with fire-resistant silicone of Example 1 was manufactured by exposing both ends of the cable core wire excluding a coated portion.

A glass fiber tape (3M 361) was wound twice around the center of the cable core wire by setting the length of the cable core wire and an exposure length of the both ends of the cable core wire to be the same as in Example 1. A cable of Comparative Example 1 was manufactured by setting a thickness to which the wound glass fiber tape was wound to be substantially the same as a thickness of the fire-resistant silicone applied.

To manufacture a cable of Comparative Example 2, a mica tape formed of phlogopite mica, which is a natural mica, was wound once around the center of a cable core wire and the glass fiber tape of Comparative Example 1 was wound once around the mica tape. A length of the cable core wire and an exposure length of both ends of the cable core wire are the same as those of Example 1 and Comparative Example 1.

To test insulation properties (insulation maintenance performance) when a fire occurs, a copper wire was wound around a covering part (a coated portion or a tape-wound part) of each of the cables of Example 1 and Comparative Examples 1 and 2 the same number of turns, one end of an outermost copper wire of the covering part was connected to a negative electrode terminal of a withstand voltage tester, and one end of the cable core wire was connected to a positive electrode terminal of the withstand voltage tester. An entire surface of each of the cables was uniformly heated by a large torch with a flame temperature of 1100 to 1150 °C while a voltage of 1000 V was applied to the cables by the withstand voltage tester.

An insulation failure time during which an insulation state is destroyed, i.e., a short circuit occurs, was measured under the above-described voltage and heating temperature conditions, and measurement results are shown in Table 1 below.

**[Table 1]**

| | | |
|---|---|---|
| Experimental Example 1 | Cable Configuration | Insulation Fail Time |
| Comparative Example 1 | copper core wire+glass fiber tape | 1 minute and 30 seconds |
| Comparative Example 2 | copper core wire+mica sheet+glass fiber tape | 4 minutes and 20 seconds |
| Example 1 | copper core wire+fire-resistant silicone | 7 minutes and 10 seconds |

As shown in Table 1, an insulation fail time of the cable with the fire-resistant silicone sheath layer of the present invention was longest and showed a significant difference from those of Comparative Examples 1 and 2.

Therefore, it can be seen that insulation characteristics of the fire-resistant cable of the present invention in which a metal case was filled with the above fire-resistant silicone sheath layer are excellent. Insulation performance of Example 1 was inspected without a metal case, and therefore, it is clear that when the metal case is installed outside the fire-resistant silicone sheath layer, the fire-resistant silicone is prevented from being directly exposed to flames, thus further improving insulation performance against external high temperatures.

### (Experimental Example 2)

Fire-resistant silicones with compositions shown in Table 2 below were prepared while changing a weight ratio between the silicone compound of Chemical Formula 1 and a metal oxide.

Fire-resistant silicones of Examples 1 to 5 were applied to a certain thickness to a copper core wire under the same conditions as in Experimental Example 1, copper wire was wound around cable sheath layers under the same conditions as in Experimental Example 1, and the withstand voltage tester was connected thereto.

In addition, heating was performed by a large torch under the same conditions as in Experimental Example 1 while a voltage was applied, an insulation fail time was measured, and measurement results are shown in Table 2 below.

**[Table 2]**

| | | |
|---|---|---|
| Experimental Example 2 | Composition of Fire-resistant Silicone Sheath Layer | Insulation Fail Time |
| Example 1 | 50 parts by weight of silicone compound: 50 parts by weight of metal oxide (quartz: 20 parts by weight pure silicon dioxide: 30 parts by weight) | 7 minutes and 10 seconds |
| Example 2 | 50 parts by weight of silicone compound: 25 parts by weight of metal oxide (quartz: 10 parts by weight, pure silicon dioxide: 15 parts by weight) | 6 minutes and 30 seconds |
| Example 3 | 50 parts by weight of silicone compound: 75 parts by weight of metal oxide (quartz: 30 parts by weight, pure silicon dioxide: 45 parts by weight) | 8 minutes and 5 seconds |
| Example 4 | 50 parts by weight of silicone compound: 20 parts by weight of metal oxide (quartz: 10 parts by weight, pure silicon dioxide: 10 parts by weight) | 5 minutes and 30 seconds |
| Example 5 | 50 parts by weight of silicone compound: 80 parts by weight of metal oxide (quartz: 35 parts by weight, pure silicon dioxide: 45 parts by weight) | 8 minutes and 20 seconds |

In Examples 1 to 5 above, weight ratios between the silicone compounds and the metal oxides were 1:1, 1:0.5, 1:1.5, 1:0.4, and 1:1.6.

The insulation fail times of all of the Examples were longer than those of Comparative Examples 1 and 2 above. However, in the case of Example 4 in which the weight ratio of the metal oxide is less than 0.5, the insulation fail time was slightly short, i.e., 5 minutes, and it is determined that the short insulation fail time was due to the generation of a slight insufficient amount of a ceramic structure having a high-density crystal structure at high temperatures due to an insufficient amount of the metal oxide.

In the case of Example 5 in which the weight ratio of the metal oxide is 1.6, the insulation fail time was sufficiently long but the amount of the metal oxide was excessive and thus the flexibility of the fire-resistant silicone decreased at room temperature, thus making it difficult to apply the fire-resistant silicone along the cable core wire.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

### (Reference Numerals)

100, 100', 100": fire-resistant cable
110: cable core wire
120: fire-resistant silicone sheath layer
130: metal case
131: opening
132: hook coupling part
133: oxide film
200: battery module
210, 220: terminal part
300: anti-flame partition
310: cable installation through-hole
320: cable installation groove
400: pack housing
1000: battery pack

## Claims

1. Afire-resistant cable (100, 100', 100") comprising:
a cable core wire (110);
a fire-resistant silicone sheath layer (120) surrounding portions of the cable core wire (110) excluding both ends of the cable core wire (110), and ceramicized at high temperatures to support the cable core wire (110); and
a metal case (130) accommodating the cable core wire (110) and the fire-resistant silicone sheath layer (120), wherein both sides of the metal case (130) are provided with openings (131) through which the both ends of the cable core wire (110) are drawn out to the outside.

2. The fire-resistant cable of claim 1, wherein the fire-resistant silicone is ceramicized at a temperature of 500 to 1700 °C.

3. The fire-resistant cable of claim 1, wherein the fire-resistant silicone is ceramicized by sintering of a silicone resin containing a silicone compound represented by Chemical Formula 1 below and a metal oxide containing silicon oxide, wherein 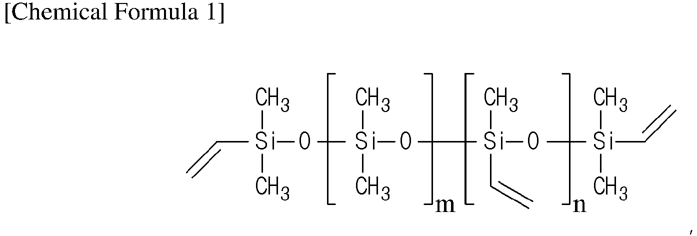 wherein m and n are each an integer of 10 to 30.

4. The fire-resistant cable of claim 3, wherein the silicone resin and the metal oxide are contained in a weight ratio of 1:0.5 to 1.5.

5. The fire-resistant cable of claim 3, wherein the metal oxide containing silicon oxide comprises at least one of pure silicon dioxide, silica, quartz, silica stone, tridymite, and keatite.

6. The fire-resistant cable of claim 1, wherein the metal case (130) comprises an upper case and a lower case, wherein the upper case and the lower case are combined with each other by hook-coupling.

7. The fire-resistant cable of claim 1, wherein at least one of an inner side and an outer side of the metal case (130) is anodized.

8. The fire-resistant cable of claim 1, wherein the metal case (130) is formed of aluminum, steel or stainless steel.

9. The fire-resistant cable of claim 1, wherein the cable core wire (110) comprises a bent portion, and
the metal case (130) comprises a bent portion corresponding to a shape of the bent portion.

10. The fire-resistant cable of claim 1, wherein the fire-resistant cable is a high-voltage cable configured to electrically connect high-voltage terminal parts (210, 220) of a plurality of battery modules (200).

11. A battery pack (1000)comprising:
a plurality of battery modules (200);
anti-flame partitions (300) installed between the plurality of battery modules (200);
the fire-resistant cable of any one of claims 1 to 10 for electrically connecting the plurality of battery modules (200); and
a pack housing (400) accommodating the plurality of battery modules (200) and the anti-flame partitions (300).

12. The battery pack (1000) of claim 11, wherein the anti-flame partitions (300) are each provided with a cable installation through-hole (310) or a cable installation groove (320),
the metal case (130) of the fire-resistant cable is seated in the cable installation through-hole (310) or the cable installation groove (320), and
both ends of the cable core wire (110) drawn out from the openings (131) of the metal case (130) are electrically coupled to terminal parts (210, 220) of the plurality of battery modules (200) at both sides of the anti-flame partitions (300).

13. The battery pack (1000) of claim 12, wherein the metal case (130) is formed to correspond to a shape of the cable installation through-hole (310) or the cable installation groove (320).

## Patentansprüche

1. Feuerfestes Kabel (100, 100', 100"), umfassend:
einen Kabel-Kerndraht (110);
eine feuerfeste Silikon-Mantelschicht (120), welche Abschnitte des Kabel-Kerndrahts (110) umgibt, mit Ausnahme beider Enden des Kabel-Kerndrahts (110), und welche bei hohen Temperaturen keramisiert ist, um den Kabel-Kerndraht (110) zu stützen; und
ein Metallgehäuse (130), welches den Kabel-Kerndraht (110) und die feuerfeste Silikon-Mantelschicht (120) aufnimmt, wobei beide Seiten des Metallgehäuses (130) mit Öffnungen (131) bereitgestellt sind, durch welche die beiden Enden des Kabel-Kerndrahts (110) nach außen zu der Außenseite gezogen sind.

2. Feuerfestes Kabel nach Anspruch 1, wobei das feuerfeste Silikon bei einer Temperatur von 500 bis 1700 °C keramisiert wird.

3. Feuerfestes Kabel nach Anspruch 1, wobei das feuerfeste Silikon durch Sintern eines Silikonharzes keramisiert wird, welches eine Silikonverbindung, welche durch nachfolgende chemische Formel 1 wiedergegeben ist, und ein Metalloxid enthält, welches Siliziumoxid enthält, wobei 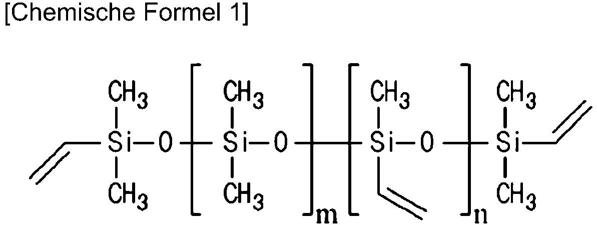 , wobei m und n jeweils eine ganze Zahl von 10 bis 30 sind.

4. Feuerfestes Kabel nach Anspruch 3, wobei das Silikonharz und das Metalloxid in einem Gewichtsverhältnis von 1:0,5 zu 1,5 enthalten sind.

5. Feuerfestes Kabel nach Anspruch 3, wobei das Metalloxid, welches Siliziumoxid enthält, wenigstens eines umfasst, aus reinem Siliziumdioxid, Silika, Quartz, Silikastein, Tridymit und Keatit.

6. Feuerfestes Kabel nach Anspruch 1, wobei das Metallgehäuse (130) ein oberes Gehäuse und ein unteres Gehäuse umfasst, wobei das obere Gehäuse und das untere Gehäuse miteinander durch eine Hakenkopplung kombiniert sind.

7. Feuerfestes Kabel nach Anspruch 1, wobei wenigstens eine aus einer inneren Seite und einer äußeren Seite des Metallgehäuses (130) eloxiert ist.

8. Feuerfestes Kabel nach Anspruch 1, wobei das Metallgehäuse (130) aus Aluminium, Stahl oder Edelstahl gebildet ist.

9. Feuerfestes Kabel nach Anspruch 1, wobei der Kabel-Kerndraht (110) einen gebogenen Abschnitt umfasst, und
wobei das Metallgehäuse (130) einen gebogenen Abschnitt umfasst, welcher einer Form des gebogenen Abschnitts entspricht.

10. Feuerfestes Kabel nach Anspruch 1, wobei das feuerfeste Kabel ein Hochspannungskabel ist, welches dazu eingerichtet ist, Hochspannung-Anschlussteile (210, 220) einer Mehrzahl von Batteriemodulen (200) elektrisch zu verbinden.

11. Batteriepack (1000), umfassend:
eine Mehrzahl von Batteriemodulen (200);
Anti-Flammen-Unterteilungen (300), welche zwischen der Mehrzahl von Batteriemodulen (200) installiert sind;
das feuerfeste Kabel nach einem der Ansprüche 1 bis 10 zum elektrischen Verbinden der Mehrzahl von Batteriemodulen (200); und
eine Packeinhausung (400), welche die Mehrzahl von Batteriemodulen (200) und die Anti-Flammen-Unterteilungen (300) aufnimmt.

12. Batteriepack (1000) nach Anspruch 11, wobei die Anti-Flammen-Unterteilungen (300) jeweils mit einem Kabelinstallation-Durchgangsloch (310) oder einer Kabelinstallation-Nut (320) bereitgestellt sind,
wobei das Metallgehäuse (130) des feuerfesten Kabels in dem Kabelinstallation-Durchgangsloch (310) oder der Kabelinstallation-Nut (320) sitzt, und
wobei beide Enden des Kabel-Kerndrahtes (110), welche durch die Öffnungen (131) des Metallgehäuses (130) herausgezogen sind, an beiden Seiten der Anti-Flammen-Unterteilungen (300) elektrisch mit Anschlussteilen (210, 220) der Mehrzahl von Batteriemodulen (200) elektrisch gekoppelt sind.

13. Batteriepack (1000) nach Anspruch 12, wobei das Metallgehäuse (130) gebildet ist, um einer Form des Kabelinstallation-Durchgangslochs (310) oder der Kabelinstallation-Nut (320) zu entsprechen.

## Revendications

1. Câble résistant au feu (100, 100', 100") comprenant :
un fil d'âme de câble (110) ;
une couche de gaine en silicone résistante au feu (120) entourant des portions du fil d'âme de câble (110) à l'exclusion des deux extrémités du fil d'âme de câble (110), et céramisée à des températures élevées pour soutenir le fil d'âme de câble (110) ; et
un boîtier métallique (130) logeant le fil d'âme de câble (110) et la couche de gaine en silicone résistante au feu (120), dans lequel les deux côtés du boîtier métallique (130) sont pourvus d'ouvertures (131) à travers lesquelles les deux extrémités du fil d'âme de câble (110) sont tirées vers l'extérieur.

2. Câble résistant au feu selon la revendication 1, dans lequel la silicone résistante au feu est céramisée à une température de 500 à 1 700 °C.

3. Câble résistant au feu selon la revendication 1, dans lequel la silicone résistante au feu est céramisée par frittage d'une résine de silicone contenant un composé silicone représenté par la Formule chimique 1 ci-dessous et d'un oxyde métallique contenant de l'oxyde de silicium, dans lequel 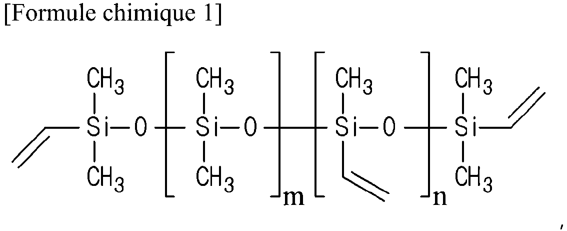 où m et n sont chacun un nombre entier de 10 à 30.

4. Câble résistant au feu selon la revendication 3, dans lequel la résine de silicone et l'oxyde métallique sont contenus selon un rapport en poids de 1:0,5 à 1,5.

5. Câble résistant au feu selon la revendication 3, dans lequel l'oxyde métallique contenant de l'oxyde de silicium comprend au moins un parmi le dioxyde de silicium pur, la silice, le quartz, la pierre de silice, la tridymite et la kéatite.

6. Câble résistant au feu selon la revendication 1, dans lequel le boîtier métallique (130) comprend un boîtier supérieur et un boîtier inférieur, dans lequel le boîtier supérieur et le boîtier inférieur sont combinés l'un avec l'autre par un couplage à crochet.

7. Câble résistant au feu selon la revendication 1, dans lequel au moins un parmi un côté intérieur et un côté extérieur du boîtier métallique (130) est anodisé.

8. Câble résistant au feu selon la revendication 1, dans lequel le boîtier métallique (130) est formé d'aluminium, d'acier ou d'acier inoxydable.

9. Câble résistant au feu selon la revendication 1, dans lequel le fil d'âme de câble (110) comprend une portion courbée, et
le boîtier métallique (130) comprend une portion courbée correspondant à une forme de la portion courbée.

10. Câble résistant au feu selon la revendication 1, dans lequel le câble résistant au feu est un câble haute tension configuré pour connecter électriquement des bornes haute tension (210, 220) d'une pluralité de modules de batterie (200).

11. Bloc-batterie (1000) comprenant :
une pluralité de modules de batteries (200) ;
des cloisons anti-flamme (300) installées entre la pluralité de modules de batterie (200) ;
le câble résistant au feu selon l'une quelconque des revendications 1 à 10 pour connecter électriquement la pluralité de modules de batterie (200) ; et
un boitier de bloc (400) logeant la pluralité de modules de batterie (200) et les cloisons anti-flamme (300).

12. Bloc-batterie (1000) selon la revendication 11, dans lequel les cloisons anti-flamme (300) sont chacune pourvues d'un trou traversant d'installation de câble (310) ou d'une rainure d'installation de câble (320),
le boîtier métallique (130) du câble résistant au feu est placé dans le trou traversant d'installation de câble (310) ou la rainure d'installation de câble (320), et
les deux extrémités du fil d'âme de câble (110) tirées à partir des ouvertures (131) du boîtier métallique (130) sont couplées électriquement aux bornes (210, 220) de la pluralité de modules de batterie (200) des deux côtés des cloisons anti-flamme (300).

13. Bloc-batterie (1000) selon la revendication 12, dans lequel le boîtier métallique (130) est formé pour correspondre à une forme du trou traversant d'installation de câble (310) ou de la rainure d'installation de câble (320).
